# EUROPEAN PATENT SPECIFICATION

(11) **EP 0 455 286 B1**
(45) Date of publication and mention of the grant of the patent: **10.07.1996**
(21) Application number: 91200836.4
(22) Date of filing: 11.04.1991
(51) Int. Cl.: B23B 29/32, B23Q 16/10

(54) **Coupling device for the transmission of the movement to toolholder units of automatic turrets**
Kupplungsvorrichtung zur Weitergabe einer Bewegung an den Werkzeughalter von automatischen Revolverköpfen
Dispositif d'accouplement pour la transmission de mouvement aux portes-outils de tourelles revolver automatiques

(30) Priority: 30.04.1990 IT 2017090
(43) Date of publication of application: 06.11.1991
(73) Proprietor: BARUFFALDI S.P.A., I-20097 San Donato Milanese Milan (IT)
(72) Inventor: Natale, Mario, Cologno Monzese, (Milano) (IT)
(74) Representative: Raimondi, Alfredo, Dott. Ing. Prof.

(56) References cited:
- EP-A- 0 214 090
- EP-A- 0 299 556
- EP-A- 0 302 998
- DE-A- 3 134 969
- FR-A- 2 030 654
- GB-A- 2 126 134

## Description

The subject of the present invention is a coupling device for the transmission of the movement to rotatable toolholder units mounted on automatic turrets. The machining operations for a large number of workpieces require the use in succession,in accordance with a preprogrammed and automatically controlled cycle, of several tools on the same workpiece. For this purpose, the workpiece is usually mounted, for example, on a lathe which possesses a turret carrying several tools, which may be disposed turn and turn about in the working position for carrying out the machining required of them on the workpiece, under the control of an electronic unit. A fundamental requirement which arises in such machining operations is the speed of performance, with reduction particularly of the dead times which intervene between the end of the work of one tool and the start of the work of the next, these dead times being necessary for allowing the turret to carry out all the movements required for bringing the new tool into the working position and only at that point transmitting the rotating motion to the tool. For this purpose, the turret must, in fact, unlock itself from the fixed working position, revolve in the one or the other sense depending upon which is the shortest travel, until it brings the new tool into the working position, and must stop and return into the blocked condition. It is, therefore, of fundamental importance, with the objective of preventing impacts and fracture of the transmission members, that said transmission of the movement shall take place with the certainty that the turret shall be correctly positioned and blocked. Said operations are carried out, in the known turrets, by mechanical devices, which transmit the rotation from an actuating motor to the toolholder plate for the positioning, and from an external motor which at the same time actuates the blocking and unblocking means, with especially complicated constructions.

The present applicant, in its earlier patent application IT-48,062 A/88, has described a toolholder turret in which the necessary unblocking, rotational and blocking movements of the turret are actuated by means of a single motor, which acts on a movable ring integral with the turret and with the actuating shaft, by means of a differential unit of the epicyclic type which acts on an annular body, the rotation of which causes a blocking ring for the movable ring to move in an axial direction, blocking in position being actuated by blocking elements which are radially movable and act upon a further body, integral with the actuating shaft, disposed between the axial blocking ring and the movable ring.

This arrangement, nevertheless, does possess certain disadvantages, since because of the size required for the transmission elements and for transmission of the rotational motion from the shaft axis of the external motor to the axes of the individual tools, it is not possible to bring all the toolholder units available into correspondence with the working position.

Furthermore, with the known arrangements, all the transmission units for the movement to the available tools are continually kept in rotation, causing wear and increasing energy consumption. A further disadvantage of the known forms of construction is represented by the fact that the positioning of the tool in correspondence with the working position and its engagement with the drive shaft for the tool take place in successive times, giving rise to dead times which reduce the productivity of the machine.

An example of the described prior art is disclosed into EP-A-0 302 998 which discloses the features of the preamble of claim 1.

The technical problem therefore arises of creating a toolholder turret for automatic machines, equipped with means for actuating the axial blocking and unblocking unit and means for actuating and transmitting the movement to the tool, in such a manner as to make possible positioning in correspondence with the working position of all the toolholder units with which the revolving disc is equipped and in such a way as to keep in rotation only the toolholder unit brought into correspondence with the sole working position, keeping all the others disengaged and stopped. The toolholder turret must furthermore make it possible to prevent any mistiming operation between toolholder unit revolving in the working position and actuating means for such unit, guaranteeing that the gearing and transmission of the movement to the tool takes place only with the turret positioned and blocked, and furthermore reducing the dead times relating to the unblocking, positioning, and renewed blocking of the turret and actuation of the tool in the working position. The turret must, furthermore, be constructed with the smallest possible number of components in order to achieve minimum wear and maximum life, in this way reducing the maintenance requirements.

Said technical problems are resolved by an automatic turret comprising a coupling device for the transmission of the movement to rotatable toolholder units having the features of claim 1.

Further details will be better understood from the following description of an embodiment of the present invention, prepared in relation to the attached sheet of drawings, in which there are illustrated:
- in Fig. 1:: an axial section of a turret comprising the device embodying the invention shown in the further figures;
- in Fig. 2a:: the turret blocked, in section on the plane II-II of Fig. 1;
- in Fig. 2b:: the turret in section on the plane II-II of Fig. 1, but in the unblocked conditions for a tool change;
- in Fig. 3a:: a detail of the coupling mechanism in section on the plane IIIA-IIIA of Fig. 2a;
- in Fig. 3b:: a detail of the push mechanism in section on the plane IIIB-IIIB of Fig. 2b;
- in Fig. 4:: a schematic front view of the turret;
- in Fig. 5:: a partial section through the turret on the plane V-V of Fig. 4;
- in Fig. 6a:: an enlarged detail in partial section of the working position with turret closed and tool engaged in rotation;
- in Fig. 6b:: a detail of Fig. 6a, but with the turret open for changing tools.

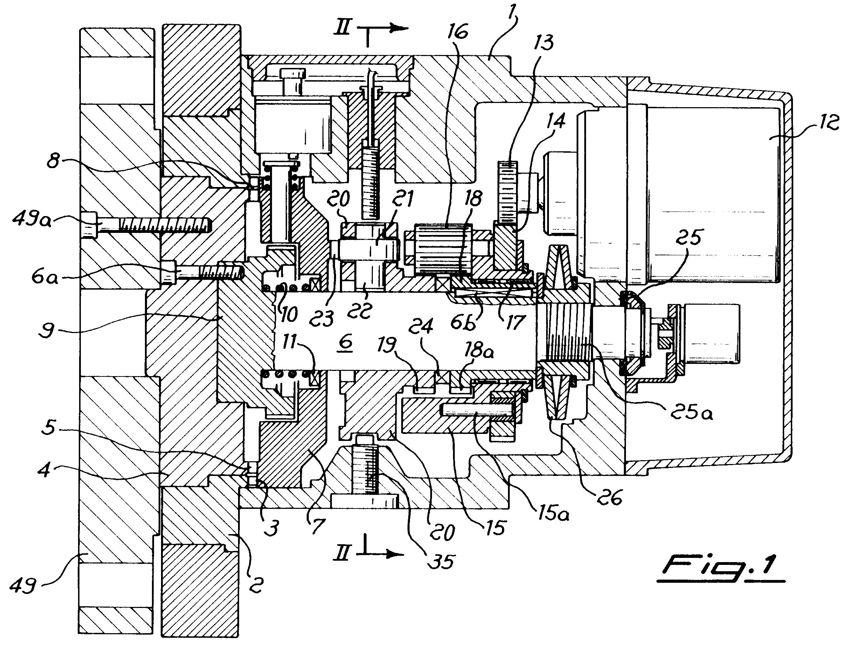

With reference to Fig. 1, the turret embodying this invention is composed of an external support body 1, comprising a fixed ring 2, equipped with the fixed frontal set of teeth 3.

Inside the body 1 is rotatably mounted a disc 4, to which can be connected the toolholder plate of the turret, not illustrated here; the disc 4 possesses the frontal set of teeth 5, concentric with and adjacent to the set of teeth 3. The front end 9 of a shaft 6, rotatable inside the body 1, is connected to the disc 4 by means of screws or the like 6a.

Around the shaft 6 there is present a blocking ring 7, toothed at the front with a set of teeth 8, facing the sets of teeth 3, 5, and adapted for engaging with them, locking them to each other; between the widened-out front end 9 of the shaft 6 and the ring 7, there is situated a spring 10, with associated thrust bearing 11, acting in the direction for keeping the set of teeth 8 out of engagement with the sets of teeth 3, 5.

Inside the outer body 1 is mounted a drive motor 12, which carries a pinion 13 in engagement with a toothed ring 14, which is secured, by means of pins or the like 15a, to a spider 15, carrying a plurality of planet wheel gears 16 disposed around a circumference, only one of which is illustrated in Fig. 1.

The spider 15 is rotatably mounted, by bearings 17, around the cylindrical portion of a gear wheel 18, rotationally locked by means of keys 6b to the shaft 6 and engaging with its set of teeth 18a the planet wheel gears 16.

The planet wheel gears 16 are, furthermore, in engagement with the set of teeth 19 of an annular body 20, coaxial with the shaft 6 and rotatable relative to same.

The planet wheel gears 16, carried by the spider 15, constitute, in conjunction with the teeth 18a of the gear wheel 18 and the teeth 19 of the annular body 20, a differential unit of the epicyclic type, in which the rotational movement imparted to the spider 15 can be transmitted to the one or the other of the sets of teeth 18a, 19, when one of them is held blocked in rotation.

The annular body 20 is equipped with a plurality of rollers 21, mounted on associated small shafts 22 having their axes radial relative to the shaft 6, these rollers bearing against the frontal cam profile 23 of the blocking ring 7.

The blocking ring 7 is held with its frontal cam profile 23 pressed against the rollers 21 by the thrust exerted by the spring 10.

The annular body 20 bears axially against the gear wheel 18, with the interposition of a thrust bearing 24, and the gear wheel 18 in turn bears against the stop ring 25, secured to the shaft 6 by a threaded zone 25a, with the interposition of a stack of cup springs 26.

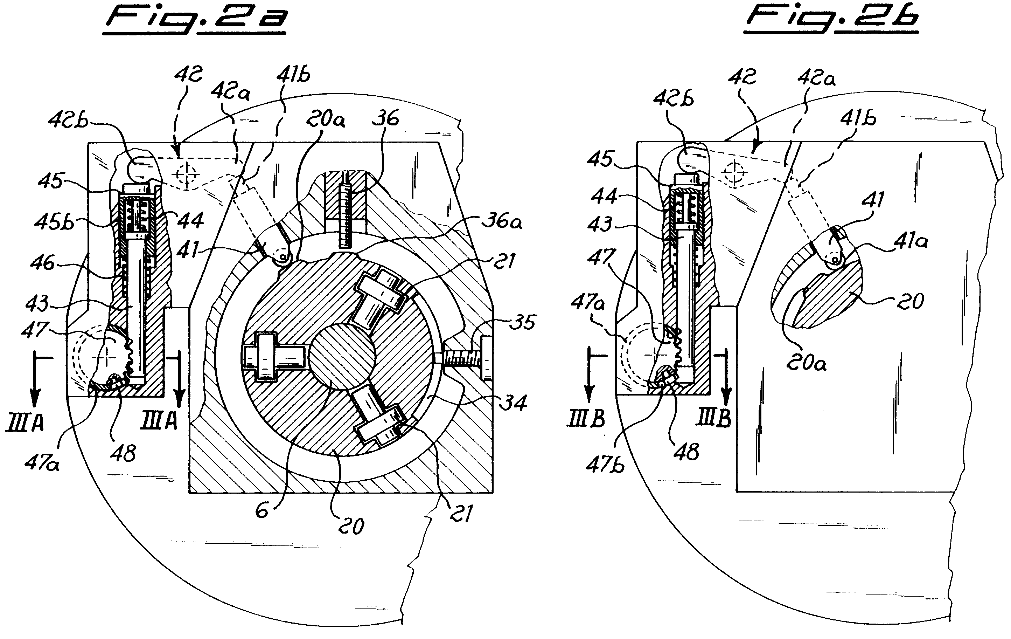

As illustrated in Fig. 2a, the annular body 20 possesses a plurality of equidistant frontal rollers 21; it is also provided with a circumferential recess 34 on its outer surface, having a limited angular extension, into which engages a fixed stop pin 35.

Facing the surface of the body 20, there is also a magnetic proximity sensor 36 or similar detection device adapted for detecting a projection 36a situated in correspondence with the desired stop position for the body 20.

On the annular body 20 there are also formed a pair of cams 20a adapted for engaging, as a result of the rotation of the body 20, with a thrust mechanism composed of a pin 41 equipped with a roller 41a in its end for contact with the cam 20a. At the opposite end 41b the pin acts upon a drive arm 42a of a lever 42, pivoted at the centre, and the resistance arm 42b of which acts upon a toothed rack 43 by means of a preloaded spring 44 inserted into an inverted "U"-seating 45, of which the arms 45b partly contain said rack and bear against a further return spring 46.

The rack 45, in turn, acts upon a circular thrust gear wheel 47, housed in a fixed circular seating 47a, on which seating there are formed three inclined slits 47b, into each of which there is inserted a pin 48, integral with the gear wheel 47 which, sliding along the inclined plane of the slit, is adapted for converting the circular motion of the gear wheel 47 into a linear push action onto a coupling element for transmission of the movement to the tool.

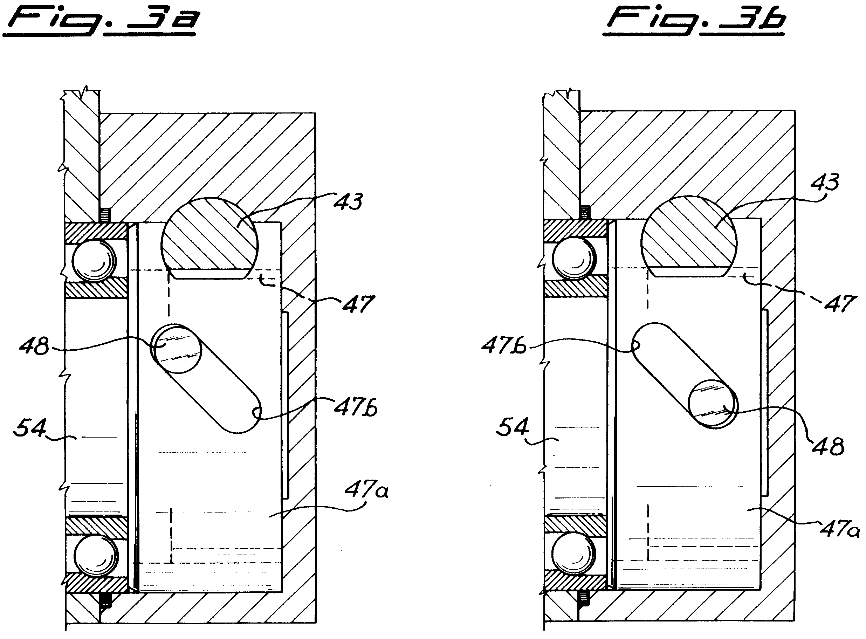

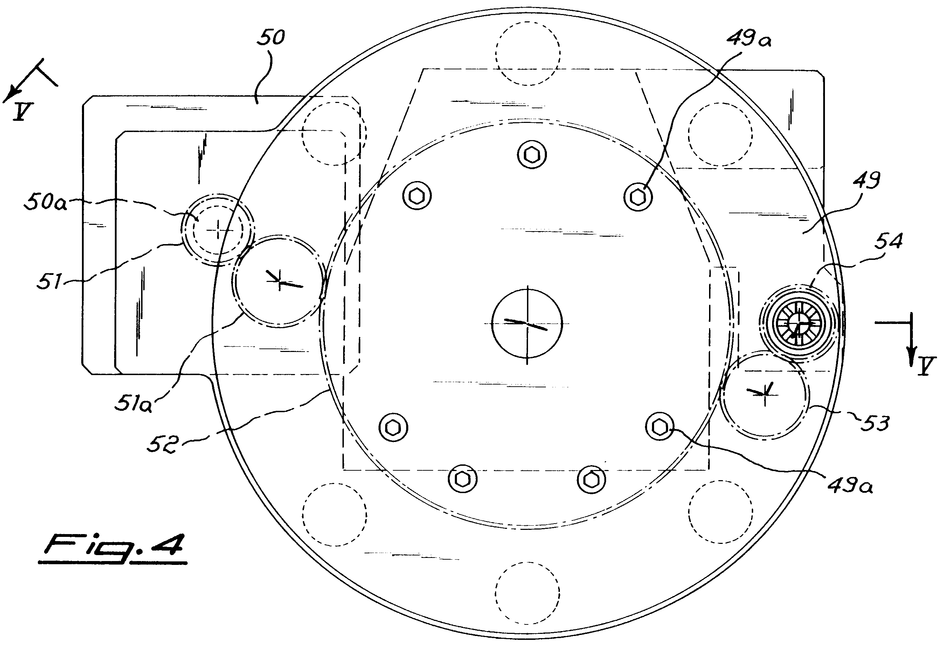

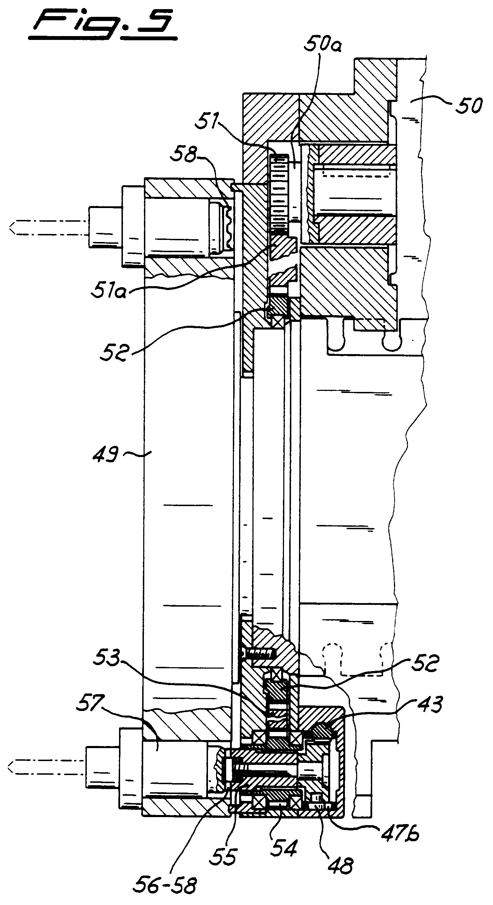

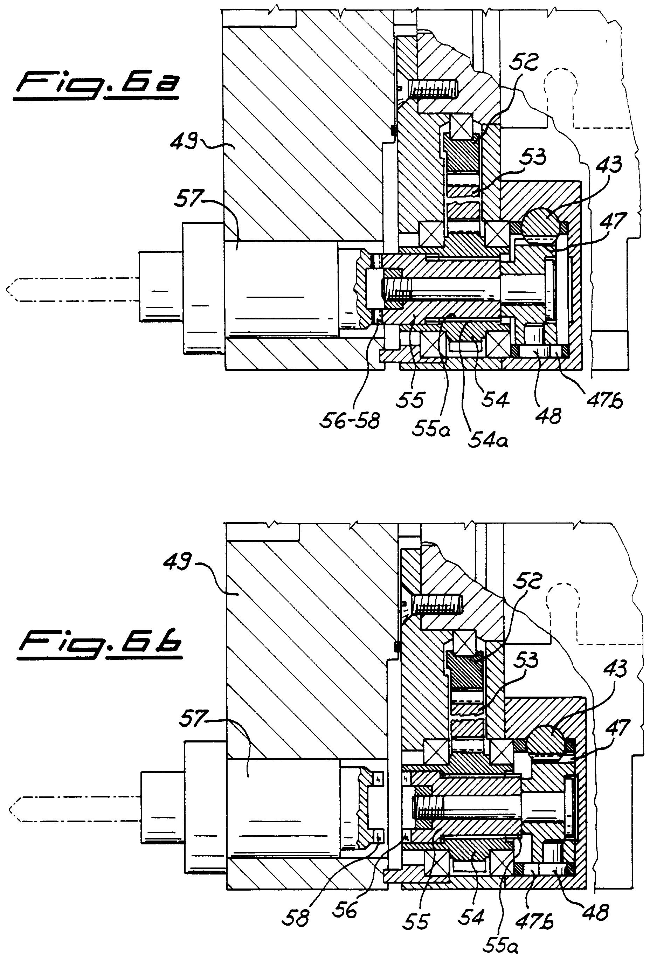

As illustrated in Figures 1, 4 and 5, the turret embodying this invention carries a toolholder disc 49, secured to the movable ring 4 by screw fixing means 49a, which revolves about the axis of the shaft 6, while the motion for the tool is generated by an external motor 50, secured to the fixed ring 2, the shaft 50a of which is keyed to a pinion 51, which actuates, successively, a transmission gear wheel 51a, a toothed ring 52 and a second transmission wheel 53, which actuates a movement take-off pinion 54 for the tool. The latter pinion 54 has, inside it, an axial cavity with radial grooves, adapted for engaging with a corresponding set of teeth formed on a coupling slider 55, housed inside said cavity and slidable axially in it. Said slider 55 has, furthermore, a front ring of axial teeth (crown gear) 56, disposed on its front end for transmitting the motion to the toolholder spindle 57. The power input to the tool in turn is composed of a spindle 57, equipped at its rear end with a frontal ring of axial teeth (crown gear) 58, adapted for engaging with the corresponding ring 56 of the slider. The method of functioning of the turret is as follows: in operating conditions (Figures 2a, 3a, 6a) the annular body 20 is disposed with the cam 20a thrusting on the pin 41, the toothed rack 43 lowered, the thrust pins 48 advanced, the coupling slider 55 advanced and the crown gears 56 and 58 of slider 55 and spindle 57 respectively engaged with each other; in this manner the tool, positioned at that instant in correspondence with the working position, takes the motion from the external motor 50 and is set in rotation. At the time of changing the tool (Figures 2b, 3b, 6b) the annular body 20 is caused to revolve until the fixed stop pin 35 comes into bearing against the end of the recess 34, and in this position, simultaneously with the axial sliding of the blocking ring 7 which releases the movable ring 4, it is found that the cam 20a disengages from the pin 41 which, sliding downwards, releases the lever 42, which by rotating upwards allows the toothed rack 43 to return into the raised position under the action of the thrust exerted by the return spring 46. The translatory movement of the toothed rack 43 causes the circular gear wheel 47 to revolve which, by revolving, compels the thrust pins 48 to slide on the inclined plane of the slits 47b, thus returning into their more remote position and pulling with them the coupling slider 55 for transmitting the movement to the spindle 57 of the toolholder. In these conditions, both the movable ring 4 and the toolholder plate 49 connected to it are free to rotate under the action of the principal shaft 6, to carry out the positioning of a different tool in correspondence with the working position.

Once this positioning has been completed, a new rotation of the annular body 20 again brings the various elements described to the initial position (Figures 2a, 3a, 6a) corresponding to the working conditions. Whenever the relative position of the various elements may allow an abutment position of the axial teeth, the load in the prestressed spring 44 would then allow the cycle of tool-changing and turret-blocking to be terminated, permitting a gradual engagement into the cavities which are present opposite the teeth as a result of the relative rotations of the individual elements and in this manner preventing abrupt coupling, which could cause breakages and the like. It is therefore evident from the above description how the toolholder turret for automatic machines embodying the present invention makes possible the positioning in correspondence with the working position of all the toolholder units with which the rotating disc is equipped, and keeps in rotation only that toolholder unit which is disposed in correspondence with the sole working position, keeping all the others disengaged and stopped; making possible also the avoidance of any mistiming operation between the revolving toolholder unit in the working position and actuating means for this unit and also reducing the dead times related to unblocking, positioning, renewed blocking of the turret and actuation of the tool in the working position.

## Claims

1. Automatic turret comprising a coupling device for the transmission of the movement to rotatable toolholder units, mounted on the turret itself, provided with coupling means (55) disposed in correspondence with the sole working position for the tool and adapted for performing an axial translatory movement for engagement with the rotatable toolholder unit (57), under the action of actuating means (47) for the translatory movement and an annular body (20) for controlling the blocking and unblocking of the turret, said coupling means being, furthermore, adapted for revolving around their own axis under the action of means (50) for generating and means (51, 52, 53) for transmitting the movement, characterized in that it comprises actuating means for the axial translatory movement of the coupling slider (55) suitable for converting a rotational movement generated by the annular body (20) for controlling the blocking and unblocking of the turret into a rectilinear movement, said actuating means including a linearly movable element (41) the ends of which are, respectively, engaged with the cam (20a) of the annular body (20) and with a lever (42) or the like, acting via elastic means (43, 44) on a linear gear (43) adapted for causing rotation of a circular gear (47), coaxial with the coupling slider (55), on which are formed a plurality of inclined planes interacting with thrust elements, associated with them and slidable on them, these thrust elements in turn being disposed in engagement with said coupling slider (55) in such a manner as to convert the rotation of the circular gear (47) into a thrust action or return action of the coupling slider (55).

2. Automatic turret according to Claim 1, characterized in that said annular body (20) possesses a cam (20a) acting in both directions, disposed circumferentially, and adapted for engaging, under the effect of the rotation of the annular body, with said conversion means for the rotational into the rectilinear movement, said body (20) carrying, furthermore, a plurality of rollers (21) having radial axes and being equipped with means for limiting the angular range, comprising a pin (35) and a circumferential recess (34) associated with it, which recess extends angularly on opposite sides from a median position, in correspondence with which the pin (35) is situated.

3. Automatic turret according to Claims 1 and 2, characterized in that said inclined planes and thrust means are preferably composed of inclined slits (47b) and pins (48) disposed inside them and acting linearly on the coupling slider (55), which under the pushing or pulling action of said pins engages with or disengages from the pick-up gear for the movement of a rotatable toolholder unit (57).

4. Automatic turret according to Claim 1, characterized in that said elastic means for the linear gear (43) are composed of a first, axially prestressed elastic means (44), disposed between two parts of said linear gear and axially slidable between them and of a second elastic means (46) interposed between the linear gear and the fixed part of the turret, said first elastic means being capable of absorbing the coupling thrust when the coupling components are opposite each other and said second elastic means actuating the return into the disengagement position of the slider (55).

## Patentansprüche

1. Automatischer Revolverkopf, welcher aufweist:
eine Kupplungsvorrichtung zur Übertragung der Bewegung auf rotierbare, am Revolverkopf selbst befestigte Werkzeughaltervorrichtungen, welcher mit Kupplungseinrichtung (55) ausgestattet ist, welche in Entsprechung zur Basisarbeitsstellung für das Werkzeug angeordnet ist und zur Ausführung einer axialen translatorischen Bewegung zum Eingriff mit der rotierbaren Werkzeughaltervorrichtung (57) unter Einwirkung einer Betätigungseinrichtung (47) zur translatorischen Bewegung befähigt ist, und einen ringförmigen Körper (20) zur Steuerung des Arretierens und Entarretierens des Revolverkopfs, wobei die Kupplungseinrichtung ferner zur Rotation um ihre eigene Achse infolge der Wirkungsweise von Einrichtung (50) zur Erzeugung und Einrichtungen (51, 52, 53) zur Übertragung der Bewegung befähigt ist, **dadurch gekennzeichnet,**
daß der Revolverkopf Betätigungseinrichtung zur axialen translatorischen Bewegung des Kupplungsschiebers (55) aufweist, welcher zur Umwandlung einer rotationellen, von dem ringförmigen Körper (20) zur Steuerung des Arretierens und Entarretierens des Revolverkopfes erzeugten Bewegung in eine gradlinige Bewegung geeignet ist, wobei die Betätigungseinrichtung ein linear bewegliches Element (41) enthält, dessen Enden mit der Nocke (20a) des ringförmigen Körpers (20) bzw. mit einem Hebel (42) oder dergleichen mehr in Eingriff sind, welcher über elastische Einrichtungen (43, 44) auf ein lineares Getriebeelement (43) wirkt, welches zur Verursachung von Rotation eines kreisförmigen Getriebeelements (47) befähigt ist, welches zum Kupplungsschieber (55) koaxial steht, auf dem eine Vielzahl an geneigten, mit den Druckelementen wechselwirkenden Ebenen ausgebildet sind, welche diesen zugeordnet und an diesen verschiebbar sind, wobei diese Druckelemente ihrerseits in Eingriff mit dem Kupplungsschieber (55) in solch einer Weise angeordnet sind, um die Rotation des kreisförmigen Getriebeelements (47) in eine Druckwirkung oder Rückstelltätigkeit des Kupplungsschiebers (55) umzuwandeln.

2. Automatischer Revolverkopf gemäß Anspruch 1, **dadurch gekennzeichnet,** daß der ringförmige Körper (20) eine Nocke (20a) besitzt, welche in beide Richtungen wirkt, umfänglich angeordnet und unter der Rotationswirkung des ringförmigen Körpers zum Eingriff mit den Wandlungsmitteln für die rotationelle in die geradlinige Bewegung befähigt ist, wobei der Körper (20) eine Vielzahl von Rollen (21) mit radialen Achsen trägt und mit Mitteln zur Begrenzung des Winkelbereichs ausgestattet ist, welche einen Bolzen (35) und eine umfängliche, diesem zugeordnete Ausnehmung (34) aufweist, wobei die Ausnehmung sich winkelförmig zu entgegengesetzten Seiten von einer Mittelposition aus erstreckt, welche mit der Stelle übereinstimmt, an der sich der Bolzen (35) befindet.

3. Automatischer Revolverkopf gemäß Ansprüchen 1 und 2, **dadurch gekennzeichnet,** daß die geneigten Ebenen und Druckeinrichtungen vorzugsweise aus geneigten Spalten (47b) und Bolzen (48) bestehen, welche in diesen angeordnet sind und auf den Kupplungsschieber (55) auf lineare Weise wirken, welcher unter der Stoß- oder der Ziehwirkung der Bolzen in Eingriff oder außer Eingriff ist mit dem Aufnehmergetriebe zur Bewegung einer rotierbaren Werkzeughaltervorrichtung (57).

4. Automatischer Revolverkopf gemäß Anspruch 1, **dadurch gekennzeichnet,** daß die elastischen Einrichtungen für das lineare Getriebeelement (43) aus einer ersten axial vorgespannten elastischen Einrichtung (44), welche zwischen zwei Teilen des linearen Getriebes und axial verschiebbar zwischen diesen angeordnet ist, und aus einer zweiten elastischen Einrichtung (46) aufgebaut sind, welche zwischen dem linearen Getriebeelement und dem unbeweglichen Teil des Revolverkopfs angeordnet ist, wobei die erste elastische Einrichtung geeignet ist, den Kupplungsdruck aufzunehmen, wenn die Kupplungskomponenten entgegengesetzt zueinander sind, und die zweite elastische Einrichtung, die Rückstellung in die Entkupplungsstellung des Schiebers (55) bewerkstelligt.

## Revendications

1. Tourelle revolver automatique comprenant un dispositif de couplage pour la transmission du mouvement à des porte-outils tournants, montés sur la tourelle revolver elle-même, munis de moyens de couplage (55) disposés en correspondance de la seule position de travail pour l'outil et prévus pour effectuer un mouvement de translation axiale en vue d'une mise en prise avec le porte-outil tournant (57), sous l'action de moyens d'actionnement (47) pour le mouvement de translation et un corps annulaire (20) pour commander le blocage et le déblocage de la tourelle revolver, lesdits moyens de couplage étant, en outre prévus pour tourner autour de leur propre axe sous l'action de moyens (50) de production et de moyens (51, 52, 53) de transmission du mouvement, caractérisée en ce qu'elle comprend des moyens d'actionnement pour le mouvement de translation axiale du coulisseau de couplage (55), appropriés pour convertir un mouvement de rotation produit par le corps annulaire (20) afin de commander le blocage et le déblocage de la tourelle revolver pour donner un mouvement rectiligne lesdits moyens d'actionnement comprenant un élément mobile linéairement (41) dont les extrémités sont, respectivement, en prise avec la came (20a) du corps annulaire (20) et avec un levier (42) ou analogue, agissant par l'intermédiaire de moyens élastiques (43, 44) sur un engrenage linéaire (43) prévu pour amener une rotation d'un engrenage circulaire (47), co-axial au coulisseau de couplage (55), sur lequel est formé un ensemble de plans inclinés agissant en liaison avec des éléments de poussée associés avec eux et pouvant coulisser sur eux, ces éléments de poussée étant à leur tour placés en prise avec ledit coulisseau de couplage (55) de manière à convertir la rotation de l'engrenage circulaire (47) en une action de poussée ou une action de retour du coulisseau de couplage (55).

2. Tourelle revolver automatique suivant la revendication 1, caractérisée en ce que ledit corps annulaire (20) possède une came (20a) agissant dans les deux directions, disposée de manière circonférentielle et prévue pour venir en prise, sous l'effet de la rotation du corps annulaire, avec lesdits moyens de conversion en vue de convertir le mouvement de rotation en mouvement rectiligne, ledit corps (20) portant, en outre, un ensemble de galets (21) présentant des axes radiaux et étant équipé de moyens pour limiter la plage angulaire, comprenant un doigt (35) et un logement circonférentiel (34) associé à celui-ci, logement qui s'étend de manière angulaire sur des côtés opposés à partir d'une position médiane, en correspondance avec laquelle est placé le doigt (35).

3. Tourelle revolver automatique suivant les revendications 1 et 2, caractérisée en ce que lesdits plans inclinés et lesdits moyens de poussée sont composés de préférence de fentes inclinées (47b) et de doigts (48) disposés à l'intérieur de celles-ci et agissant de manière linéaire sur le coulisseau de couplage (55) qui, sous l'action de poussée ou de traction desdits doigts, vient en prise ou se dégage de l'engrenage de réception pour le mouvement d'un porte-outil tournant (57).

4. Tourelle revolver automatique suivant la revendication 1, caractérisée en ce que lesdits moyens élastiques pour l'engrenage linéaire (43) sont composés d'un premier moyen élastique (44) à précontrainte axiale, disposé entre deux parties dudit engrenage linéaire et pouvant coulisser axialement entre elles et d'un second moyen élastique (46) interposé entre l'engrenage linéaire et la partie fixe de la tourelle revolver, lesdits moyens élastiques étant capables d'absorber la poussée de couplage lorsque les éléments de couplage sont opposés l'un à l'autre et lesdits seconds moyens élastiques actionnant le retour dans la position de dégagement du coulisseau (55).
